# EUROPEAN PATENT APPLICATION

(11) **EP 2 003 294 A1**
(43) Date of publication of application: **17.12.2008**
(21) Application number: 07106860.5
(22) Date of filing: 24.04.2007
(51) Int. Cl.: F01K 23/10

(54) **Cogeneration method**

(30) Priority: 30.03.2007 EP 07006671
(71) Applicant: SIEMENS AKTIENGESELLSCHAFT, 80333 München (DE)
(72) Inventor: Sjödin, Mats, 612 33 Finspong (SE)

(57) **Abstract**

The invention concerns a method for cogeneration, wherein a first flow (F1) of compressed oxygen and a combustible containing carbon is mixed with a second flow (F2) containing water steam and carbon dioxide to obtain a third flow (F3), wherein either the third flow (F3) is burned after mixing, or wherein the mixture of the combustible and the oxygen is burned before mixing of the first flow (F1) with the second flow (F2) to obtain the third flow (F3), wherein the third flow (F3) is expanded in a first expansion (E1) generating mechanical and/or electrical power, wherein the third flow (F3) is cooled by exchanging heat during a first heat exchange (EX1) with a fifth flow (F5) containing water being evaporated, wherein the fifth flow (F5) is expanded in a second expansion (E2) generating mechanical and/or electrical power, wherein the third flow (F3) is divided into a fourth flow (F4) and the second flow (F2), wherein the second flow (F2) is compressed and cooled before it is mixed with the first flow (F1). To increase cycle efficiency it is proposed to cool the second flow (F2) is during a second heat exchange (EX2) by exchanging heat with at least a part of the fifth flow (F5) during and/or after the compression of the second flow (F2).

## Description

The invention concerns a method for cogeneration, wherein a first flow of compressed oxygen and a combustible containing carbon is mixed with a second flow containing water steam and carbon dioxide to obtain a third flow, wherein either the third flow is burned after mixing, or wherein the mixture of the combustible and the oxygen is burned before mixing of the first flow with the second flow to obtain the third flow, wherein the third flow is expanded in a first expansion generating mechanical and/or electrical power, wherein the third flow is cooled by exchanging heat during a first heat exchange with a fifth flow containing water being evaporated, wherein the fifth flow is expanded in a second expansion generating mechanical and/or electrical power, wherein the third flow is divided into a fourth flow and the second flow, wherein the second flow is compressed and cooled before it is mixed with the first flow.

Due to the increasing awareness to climate relevant emissions a lot of effort is undertaken to minimise the emission of carbon dioxide, which is thought to be one of the most relevant reasons for the increase of the world's temperature respectively the greenhouse effect. Latest developments led to a cogeneration cycle having zero emission and a higher efficiency, which is commonly called "Graz Cycle". Within this cycle fossil fuels with pure oxygen are burned, which enables the separation of the carbon dioxide generated during the oxidation cost effective by condensation. The high cycle efficiencies compensate at least partly the efforts for the supply of pure oxygen undertaken in an upstream air separation module. This cycle becomes a zero emission cycle if the separated carbon dioxide is stored at an adequate location.

Basically the Graz Cycle consists of a so called Brayton Cycle operated at a high temperature combined with a low temperature Rankine Cycle. Typically the Brayton Cycle consists of compressors, a combustion chamber and a high temperature turbine. Often a Rankine Cycle consists of a steam turbine, a condenser and a steam generator. The steam generator might be a heat recovery steam generator. The turbine can be a one casing turbine or a combination of high-, intermediate- or low-pressure turbines. Preferably the fuel is natural gas together with a nearly stochiometric mass flow of oxygen, which is supplied to a combustion chamber respectively burner, preferably operated at a pressure of 20 bar - 60 bar. The high temperature turbine therefore is operated at a temperature of up to 1500°C and is cooled by a mixture of carbon dioxide and water as well as the burner respectively the combustion chamber and all other parts which are exposed to the high temperature. After expansion in the high temperature turbine the hot exhaust gas is cooled in a following heat recovery steam generator vaporising and superheating steam for a high pressure turbine. The cooled exhaust gas exiting the heat recovery steam generator is divided into two part flows, of which a first is compressed and fed into the combustion chamber respectively burner. The exiting mixture of steam and carbon dioxide is supplied to a condensation, during which the water is separated from the carbon dioxide. The separated water of the second condensation is fed back into the water steam cycle, in which a condenser and a feed water pump are operated. This cycle is powered by the heat recovery steam generator heated by the exhaust gas of the high temperature turbine on the primary side vaporizing and superheating the water respectively steam on the secondary side.

It is one object of the invention to increase the efficiency of at least a part of the Graz Cycle.

According to the invention the second flow is cooled by exchanging heat with at least a part of the fifth flow during/or after the compression of the fifth flow.

The additional heat exchange according to the invention leads to two advantageous effects. First of all the excessive heat generated during the compression of the second flow is recovered and converted into energy by the connected second expansion. The second advantage is the cooling of the compressors, which reduces significantly the thermal load and therefore the requirements for the compressors, which otherwise must be prepared to cope with higher temperatures.

The preferred combustible for the process according to the invention contains methane or ethane or propane, respectively can be natural gas, which is available in significant amounts.

In a preferred embodiment of the invention the first expansion takes place in a turbine, which is cooled by a sixth flow, which is a separated part of the fifth flow. The sixth flow is preferably separated from the fifth flow either before the fifth flow enters the first heat exchange or during the first heat exchange, when the temperature is still low enough, to cool the turbine of the first expansion.

In order to have the highest possible efficiency of the co-generation, in which the fifth flow is involved, the fifth flow is condensed and delivered to a higher pressure level after the second expansion before it enters the first heat exchange or the second heat exchange again.

To close the water steam cycle, in which the second expansion leads to power generation, the water from the fourth flow, which contains carbon dioxide and water, can be separated during a first separation or separated and deaerated and introduced as a sixth flow into the fifth flow. This recycling saves the otherwise necessary effort to process respectively purify additional water.

This introduction of the water into the fifth flow should be done before the delivery to a higher pressure level takes place.

To have zero emission the carbon dioxide of the fourth flow after the separation of the water can be compressed, if applicable liquefied and stored at an adequate location as a eighth flow. Advantageously the separation of the water from the carbon dioxide is carried out during a second condensation in at least one condenser. To increase condensing efficiency the second condensation can be carried out in at least two stages, at a first condensing stage under a first pressure level and a second condensing stage under a second pressure level, being higher than the first pressure level.

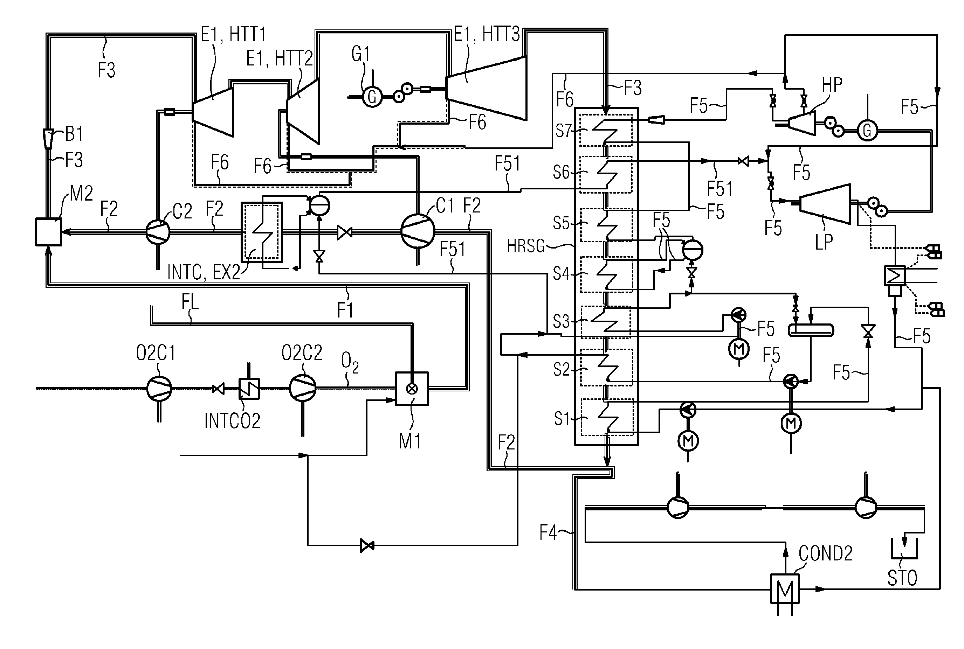

The above mentioned attributes and other features and advantages of this invention and the manner of attaining them, will become more apparent and the invention itself will be understood better by reference to the following description of embodiments of the invention taken in conjunction with the accompanying drawing, wherein
- Figure 1: shows a schematic flow diagram of a cogeneration cycle according to the invention.

Figure 1 shows a schematic flow diagram of a co-generation cycle according to the invention.

In the schematic flow diagram of figure 1 a flow of oxygen FO₂ and a flow of fuel FLNG consisting of the main components methane, ethane and propane are mixed in a combustion chamber CC after being compressed to a higher pressure level of a proximately 30 bar. Figure 1 shows the compression of oxygen O₂ by two oxygen compressors O2C1, O2C2 having an intermediate cooling INTCO2 arranged between them.

This nearly stochiometric mixture is burned in the combustion chamber CC to obtain a first flow F1. To toughen the combustion chamber CC up for higher temperatures it is cooled by an eighth flow F8, which is a separated part of a fifth flow F5, which is liquid water.

The burned mixture of mainly carbon dioxide and water, containing smaller amounts of some other ingredients respectively the first flow F1 is subsequently mixed in a mixing chamber M2 with a second flow F2 consisting mainly of a mixture of water and carbon dioxide. The resulting third flow F3 contains approximately 25% carbon dioxide, 72% water steam, 1,3% Argon and 2,8% nitrogen.

This mixing can also take place before the burning in the combustion chamber CC, which would have a significant impact on the resulting temperature.

The hot gas of the third flow F3 is expanded in a first expansion E1 generating mechanical power, which is partly converted into electricity by a generator G1 and which is partly used to drive two compressors C1, C2, which compress the second flow F2 before the mixing with the first flow F1.

The first expansion E1 takes place in high temperature turbines HTT1, HTT2, HTT3, which are arranged in serial order with respect to the hot gas flow.

The first and second turbine HTT1, HTT2 drive the compressors C1 and C2 and the third turbine HTT3 drives the generator's G1 shaft.

The hot exhaust gas, respectively the third flow F3 of the first expansion E1 enters a heat recovery steam generator HRSG. The heat recovery steam generator HRSG is divided into seven stages S1 to S7, wherein in each stage the third flow F3 is cooled on a primary side of the heat exchanger. The stage S7 has the highest temperature and the temperature decreases from stage to stage down to the stage S1 with the lowest temperature.

The third flow F3 exiting the heat recovery steam generator HRSG is divided in a fourth flow F4 and the second flow F2, both having approximately a pressure of one bar and a temperature of approximately 100°C.

The second flow F2 enters the first compressor C1 compressing up to a pressure level of approximately 13 bar and increasing the temperature to approximately 350°C.

Afterwards the second flow F2 is cooled in an intercooler INTC during a second heat exchange EX2 down to a temperature of approximately 270°C before it enters the second compressor C2 rising the pressure up to approximately 30 bar and increasing the temperature up to approximately 420°C before mixing with the first flow F1 in the mixing chamber M2 resulting in the third flow F3.

The fourth flow F4 is supplied to a condenser COND2, in which the carbon dioxide is separated from the water, wherein the carbon dioxide forms an eleventh flow F11 and the water a tenth flow F10.

A compression of the eleventh flow F11 takes place in two stages CO2C1, CO2C2 before the cabon dioxide is stored as a liquid in a final storing destination STO.

On the secondary side of the heat recovery steam generator HRSG a fifth flow F5 is heated up beginning in the first stage S1 as a compressed liquid of approximately 5 bar, continuing in the second stage S2 after further compression and also continuing as compressed liquid in the third stage S3 after further compression up to a pressure of approximately 80 bar. In the following two stages S4 and S5 the fifth flow F5 is completely vaporized and in the last stage S7 the fifth flow F5 is superheated.

The superheated fifth flow F5 enters a high pressure steam turbine HP and subsequently a low pressure steam turbine LP. The difference between the high pressure turbine and the low pressure turbine is that the average operating pressure of the low pressure turbine is lower than the average operating pressure of the high pressure turbine. If applicable an intermediate pressure turbine can also be provided in between the two pressure levels.

Between the second stage S2 and the third stage S3 of the heat recovery steam generator HRSG a part of the fifth flow F5, hereinafter named the ninth flow F9, is supplied to the intercooler INTC for a second heat exchange EX2 cooling the second flow F2 between the first compression C1 and the second compression C2.

A further seperated part of the fifth flow F5 becomes the before mentioned eighth flow F8 is taken to cool the combustion chamber CC, wherein this part mixes with the hot gas of the expansion to become part of the first flow F1.

After the second heat exchange EX2 the ninth flow F9 enters the secondary side of the sixth stage S6 of the heat recovery steam generator HRSG and is introduced to the fifth flow F5 before it enters the low pressure turbine LP. The fifth flow F5 is condensed in a first condenser COND1 after expansion in the low pressure turbine LP. The fifth flow F5 enters afterwards the first feed water pump FW1 before being supplied to the first stage S1. The first feed water pump FW1 delivers the fifth flow F5 to a pressure level, which is sufficient for deaeration in a deaerator DEAR, which deaerator DEAR is provided between the first stage S1 and the second stage S2 of the heat recovery steam generator HRSG. Between stages S1 and S2 after the deaerator DEAR a main feed water pump FW2 is located to give the water the main pressure rise. Between stages S2 and S3 a booster feed water pump FW3 is located for further pressure increase.

The tenth flow F10 of water separated from the fourth flow F4 is added to the fifth flow F5 behind the first condenser COND1.

The fist turbine HTT1 of the first Expansion EX1, which drives the compressor C2 is designed at a running speed of approx. 12000 rpm, inlet pressure approx. 30 bar, temperature approx. 1300 °C, mass flow approx. 80 kg/s and outlet pressure approx. 13 bar. The pressure ratio (approx. 2.5) can be quite low for a two stage turbine. If only one stage is used transonic flow or high turbine disc rim speed can be established. A two stage turbine might require a cooling mass flow estimated to approx. 15 kg/s.

The power generating turbine HTT3 can be designed at a running speed of approx. 6000 rpm with an inlet pressure approx. 13 bar, temperature approx. 1000 °C, mass flow approx. 90 kg/s and outlet pressure approx. 1.0 bar. The number of stages can be three. An inlet temperature can be higher than approx. 850 °C so that cooling steam might be needed for the inlet stage and the cooling air mass flow is estimated to approx. 3.0 kg/s.

The high pressure turbine HP in the water steam cycle can be designed at a running speed approx. 12500 rpm, inlet pressure approx. 65 bar, temperature approx. 500°C, mass flow approx. 15kg/s and outlet pressure approx. 30 bar.

The low pressure turbine LP of the water steam cycle can be designed at a running speed approx. 9000 rpm, inlet pressure approx. 30 bar, temperature approx. 400 °C, mass flow approx. 6 kg/s and outlet pressure approx. 0.04 bar.

While the present invention has been described as having a preferred design, it can be further modified within the spirit and the scope of this disclosure. This application is therefore intended to cover any variations, uses or adoptions of the invention using its general principals. Further, this application is intended to cover such departures from the present disclosure as come with a known or customer practice in the art to which this invention pertains.

## Claims

1. Method for cogeneration,
wherein a first flow (F1) of compressed oxygen and a combustible containing carbon is mixed with a second flow (F2) containing water steam and carbon dioxide to obtain a third flow (F3),
wherein either the third flow (F3) is burned after mixing, or wherein the mixture of the combustible and the oxygen is burned before mixing of the first flow (F1) with the second flow (F2) to obtain the third flow (F3),
wherein the third flow (F3) is expanded in a first expansion (E1) generating mechanical and/or electrical power, wherein the third flow (F3) is cooled by exchanging heat during a first heat exchange (EX1) with a fifth flow (F5) containing water being evaporated,
wherein the fifth flow (F5) is expanded in a second expansion (E2) generating mechanical and/or electrical power, wherein the third flow (F3) is divided into a fourth flow (F4) and the second flow (F2),
wherein the second flow (F2) is compressed and cooled before it is mixed with the first flow (F1),
**characterised in that**
the second flow (F2) is cooled during a second heat exchange (EX2) by exchanging heat with at least a part of the fifth flow (F5)(ninth flow F9) during and/or after the compression of the second flow (F2).

2. Method according to claim 1,
**characterised in that** the combustible contains methane and/or ethane and/or propane.

3. Method according to claim 1,
**characterised in that** the combustible is natural gas.

4. Method according to claim 1,
**characterised in that** the first expansion (EX1) is cooled by a sixth flow (F6), which is part of the fifth flow (F5) and separated from the fifth flow (F5) before and/or during the first heat exchange (EX) (EX1).

5. Method according to claim 1,
**characterised in that** the combustion of the combustible is cooled by an eighth flow (F8), which is part of the fifth flow (F5) and separated from the fifth flow (F5) before and/or during the first heat exchange (EX1).

6. Method according to one of the claims 1, 2, 3, 4, 5,
**characterised in that** the fifth flow (F5) is condensed and delivered to a higher pressure level after the second expansion (E2) before it enters the first heat exchange (EX1) and/or the second heat exchange (EX2) again.

7. Method according to one of the claims 1 to 6,
**characterised in that** the water from the fourth flow (F4) during a first separation (condenser COND 2) is separated or separated and deaerated and introduced as a tenth flow (F10) into the fifth flow (F5).

8. Method according to claim 7,
**characterised in that** the introduction of the tenth flow (F10) into the fifth flow (F5) takes place before delivery of the fifth flow (F5) to a higher pressure level.

9. Method according to claim 7 or 8,
**characterised in that** the carbon dioxide of the fourth flow (F4) after the first separation is compressed and/or stored as an eleventh flow (F11).

10. Method according to one of the claims 6 to 9,
**characterised in that** the separation of the water from the carbon dioxide is carried out during a second condensation in at least one condenser (COND2).

11. Method according to claim 9,
**characterised in that** the second condensation (condenser COND 2) is carried out in at least two stages, at a first condensing stage at a first pressure level (p1) and a second condensing stage at a second pressure level, which second pressure level (p2) is higher than the fist pressure level (p1).
